# EUROPEAN PATENT APPLICATION

(11) **EP 3 012 009 A1**
(43) Date of publication of application: **27.04.2016**
(21) Application number: 14813058.6
(22) Date of filing: 10.06.2014
(51) Int. Cl.: B01D 53/14, B01D 53/26, B65D 81/26

(54) **CONTAINER CONTAINING ABSORBENT**

(30) Priority: 21.06.2013 JP 2013130868
(71) Applicant: Mitsubishi Gas Chemical Company, Inc., Tokyo 100-8324 (JP)
(72) Inventor: SUGITO, Ken, Katsushika-ku, Tokyo 125-8601 (JP)
(74) Representative: Hoffmann Eitle
(86) International application number: PCT/JP2014/065360
(87) International publication number: WO 2014/203770

(57) **Abstract**

Problem to be Solved

To provide a low-cost absorbent-containing container which houses an absorbent for absorbing a gas such as oxygen, and can house an absorbent which reacts with a gas to expand as well as can house an absorbent which has a small diameter or whose diameter decreases without leakage, while securing air permeation between the inside and the outside of the container.

Solution

An absorbent-containing container 1 has a lid body 11 and a bottomed-cylindrical container main body 10 having an opening 20 in an upper surface which is covered by the lid body 11 and which has a paper layer 50 as an inner layer. The lid body 11 is fitted in the opening 20 with an outer peripheral portion 11a being bent upward and held in contact with an inner layer of the container main body 10. An upper end portion 10a of the container main body 10 is bent from above the lid body 11 toward the lid body 11 to grip the outer peripheral portion 11a of the lid body 11.

## Description

### Technical Field

The present invention relates to an absorbent-containing container which houses an absorbent for absorbing a gas such as oxygen.

### Background Art

To prevent deterioration due to oxidation or moisture absorption of, for example, food products, pharmaceutical drugs, medical supplies, cosmetic products, metal products, and electronic products, an oxygen absorbent or a desiccant is enclosed in the packaging bodies of these products. Depending on the intended use, the packaging body of a product comes in a bag shape or a bottle shape. In the case of a bottle-shaped packaging body, because of its narrow inlet, a desiccant or an oxygen absorbent housed in a bag is difficult to feed into the packaging body; therefore, it is housed instead in a small container (canister container) of a definite shape and fed into the packaging body (see Patent Literature 1). Since the oxygen absorbent or the desiccant serves to remove oxygen or water vapor inside the packaging body of a product, the canister container is required to allow air permeation between the inside and the outside of the container.

### Citation List

### Patent Literature

Patent Literature 1: Japanese Patent Laid-Open No. 2003-312729

### Summary of Invention

### Technical Problem

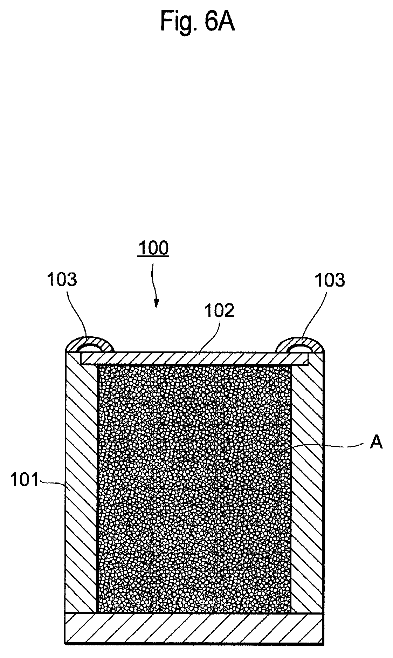

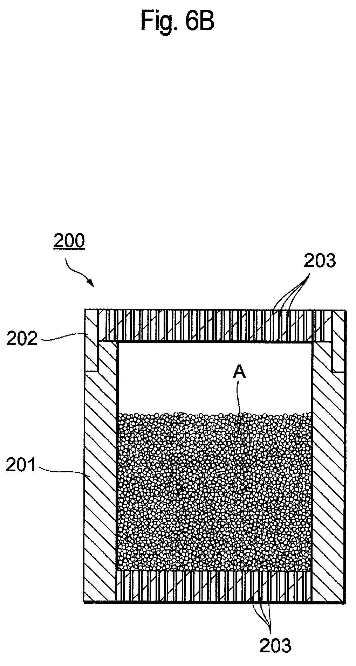

The above-mentioned canister containers are divided into a paper lid type and a permeable pore lid type as shown in Figures 6A and 6B. A paper lid-type container 100 shown in Figure 6A has a resin-molded container main body 101 and a lid 102 made of air-permeable cardboard. When housing an absorbent A such as an oxygen absorbent, the absorbent A is overpacked into the container main body 101 and compressed, and the lid 102 is dropped into the container main body 101, and then a claw part 103 at the upper end of the container main body 101 is bent inward to tack and fix the lid 102. Since this paper lid-type container 100 is packed fully (packed without gaps) with the absorbent A, it cannot be used for an absorbing material, for example, calcium oxide, which, upon contact with external air containing water vapor, reacts with this water vapor to expand in volume.

On the other hand, a permeable pore lid-type container 200 shown in Figure 6B has resin-molded container main body 201 and lid 202 which are bonded with each other. Permeable pores 203 are opened in the bottom part of the container main body 201 and the lid 202. Since this permeable pore lid-type container 200 is not necessarily fully packed with the absorbent A, it can also be used for an absorbent which reacts with water vapor to expand in volume. However, due to the permeable pores 203 opened on the upper and lower sides, an absorbent which has a small diameter or an absorbent which breaks into a fine powder cannot be used for fear of possible leakage from the permeable pores 203.

Moreover, since the container main body is molded from a resin, the above containers 100, 200 are costly as a whole.

The present invention has been devised in view of these problems, and an object of the present invention is to provide a low-cost absorbent-containing container which houses an absorbent for absorbing a gas such as oxygen, and can house an absorbent which reacts with a gas to expand as well as can house an absorbent which has a small diameter or whose diameter decreases without leakage, while securing air permeation between the inside and the outside of the container.

### Solution to Problem

The present invention for achieving the above object is an absorbent-containing container which houses an absorbent for absorbing a gas, the absorbent-containing container including: a lid body; and a bottomed-cylindrical container main body having an opening in an upper surface which is covered by the lid body. The lid body is fitted in the opening with an outer peripheral portion of the lid body being bent upward and held in contact with an inner peripheral layer of the container main body. An upper end portion of the container main body is bent from above the lid body toward the lid body to grip the outer peripheral portion of the lid body. A paper layer is used for at least either an inner peripheral layer of the container main body or an inner layer of the lid body.

According to the above configuration, it is possible to realize a low-cost absorbent-containing container which can house an absorbent which reacts with a gas to expand as well as can house an absorbent which has a small diameter or whose diameter decreases without leakage, while securing air permeation between the inside and the outside of the container.

The container main body may have a paper layer.

The container main body and the lid body may be made of a multilayered paper having a non-porous water-impermeable layer. In this case, it is possible to suppress leakage of moisture inside the container to the outside. Thus, the absorbent-containing container of the present invention can be suitably used for an absorbent which requires moisture during absorption.

The container main body may have an cylindrical part which has an opening in a lower surface, and a bottom part which covers the opening in the lower surface; a lower end portion of the cylindrical part may be bent inward; the bottom part may be disposed on the lower end portion of the cylindrical part; and the cylindrical part and the bottom part may be bonded with each other with an adhesive. In this case, the container main body is easy to manufacture, and the cost can be reduced.

The absorbent may be a desiccant and/or an oxygen absorbent.

### Advantageous Effects of Invention

According to the present invention, it is possible to provide a low-cost absorbent-containing container which houses an absorbent for absorbing a gas such as oxygen, and can house an absorbent which reacts with a gas to expand as well as can house an absorbent which has a small diameter or whose diameter decreases without leakage, while securing air permeation between the inside and the outside of the container.

### Brief Description of Drawings

[Figure 1] Figure 1 is a perspective view showing the outline of an absorbent-containing container.
[Figure 2] Figure 2 is a vertical cross-sectional view illustrating the configuration of the absorbent-containing container.
[Figure 3] Figure 3 is a perspective view of a lid body.
[Figure 4] Figure 4 is an enlarged view of a fitting part between the lid body and a container main body.
[Figure 5] Figure 5 is a vertical cross-sectional view illustrating an absorbent-containing container whose bottom part has the same configuration as the lid body.
[Figure 6] Figure 6A is a view showing a paper lid-type canister container, and Figure 6B is a view showing a permeable pore lid-type canister container.

### Description of Embodiments

In the following, a preferred embodiment of the present invention will be described with reference to the drawings. The same components will be given the same reference signs and a repeated description thereof will be omitted. Unless otherwise noted, words referring to a positional relation such as upper, lower, left, and right are based on the positional relation shown in the drawings. Moreover, the actual dimensional ratio is not limited to the ratio shown in the drawings. The following embodiment is merely an example for describing the present invention, and the present invention is not limited to this embodiment.

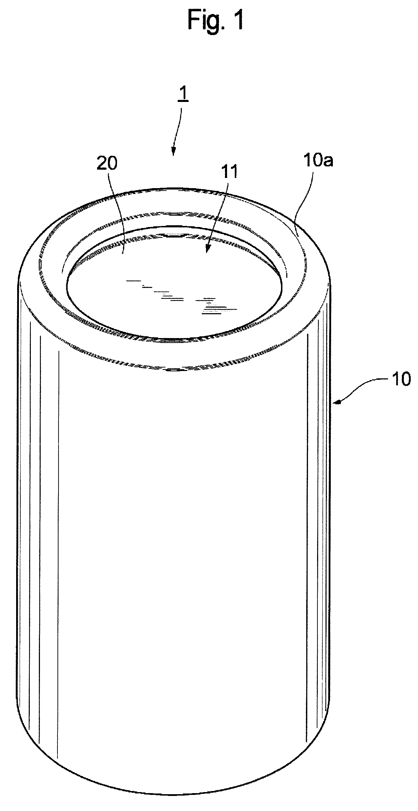

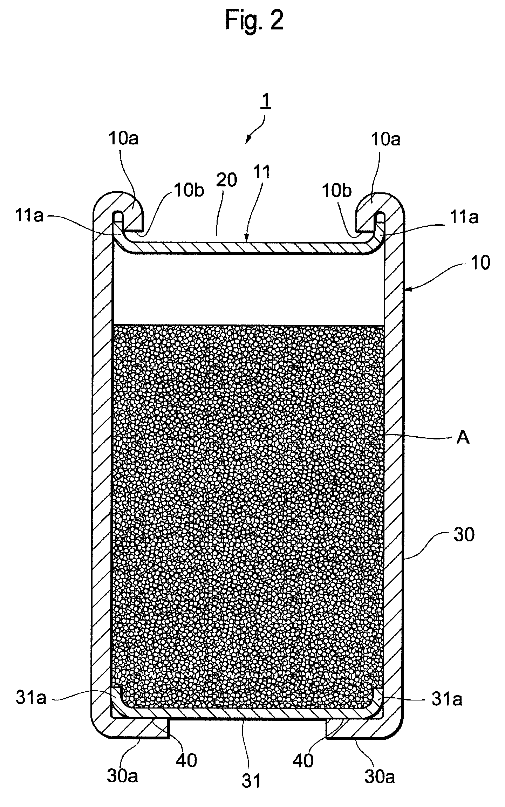

Figure 1 is a perspective view showing the outline of the configuration of an absorbent-containing container 1 which houses an absorbent in this embodiment, and Figure 2 is a vertical cross-sectional view of the absorbent-containing container 1. In this specification, the absorbent-containing container may also be referred to simply as a container. In this specification, the bottom side of the container 1 will be referred to as the lower side, and the lid side of the container 1 will be referred to as the upper side.

The absorbent-containing container 1 shown in Figure 1 and Figure 2 is made of paper, and has a columnar outer shape, for example, and includes a container main body 10 and a lid body 11. Here, being made of paper means that the container 1 is mainly composed of paper, and having a resin film layer as a surface or an inner layer is also included in the meaning.

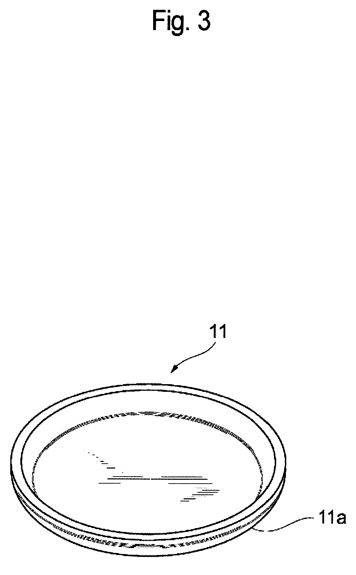

For example, the container main body 10 has a bottomed-cylindrical shape with an upper opening 20 covered by the lid body 11. The lid body 11 has a thin disc shape as shown in Figure 3, and is formed by bending a circular plate having a larger diameter than the inner diameter of the container main body 10. An outer peripheral portion 11a of the lid body 11 is bent upward. As shown in Figure 2, the lid body 11 is fitted in the upper opening 20 with the outer peripheral portion 11a being held in contact with an inner peripheral wall of the container main body 10.

An upper end part portion 10a of the container main body 10 is bent inward, which is toward the lid body 11 side, from above the lid body 11 to grip the outer peripheral portion 11a of the lid body 11. Meanwhile, a leading end 10b of the upper end portion 10a of the container main body 10 is exposed to the outside of the container 1.

For example, the container main body 10 has a cylindrical part 30 and a bottom part 31 as separate bodies. A lower end portion 30a of the cylindrical part 30 is bent inward. Similarly to the lid body 11, the bottom part 31 has a thin disc shape, and is formed by bending upward an outer peripheral portion 31a of a circular plate having a larger diameter than the inner diameter of the container main body 10. The bottom part 31 is fitted in the cylindrical part 30, and is disposed on the lower end portion 30a of the cylindrical part 30. The bottom part 31 and the lower end portion 30a of the cylindrical part 30 are bonded with each other with an adhesive 40.

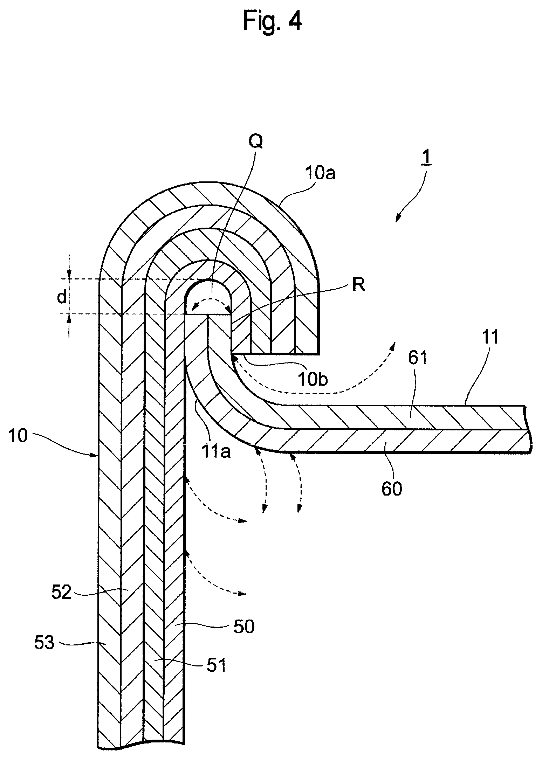

As shown in Figure 4, the container main body 10 is composed of a multilayered paper having a paper layer 50 as the innermost layer. The container main body 10 is composed, for example, of the paper layer 50, a PP (polypropylene) layer 51 as a non-porous water-impermeable layer, a paper layer 52, and a PET (polyethylene terephthalate) layer 53 as a water-impermeable layer, from the inner periphery toward the outer periphery. The lid body 11 has, for example, a paper layer 60 as an inner layer and a PP layer 61 as an outer layer, from the lower side toward the upper side. Since the container main body 10 has the paper layer 50, when the upper end portion 10a of the container main body 10 is bent to grip the outer peripheral portion 11a of the lid body 11, a narrow clearance Q is left between the bent part of the upper end portion 10a and the leading end portion of the lid body 11. Moreover, a narrow clearance R is left between the bent upper end portion 10a of the container main body 10 and the lid body 11. This clearance R is left because at least the container main body 10 has a paper property and therefore the container main body 10 and the lid body 11 do not completely come into contact with each other. While the clearance Q in Figure 4 is larger than the clearance R, the clearance Q may be as extremely narrow as the clearance R since it is only necessary to secure air permeation. As a result, the inside of the container 1 leads to the clearance Q through the air-permeable paper layer 50 of the container main body 10 or the air-permeable paper layer 60 of the lid body 11, and further leads from the clearance Q to the outside through the clearance R. In addition, since the leading end 10b of the upper end portion 10a of the container main body 10 is exposed to the outside of the container 1, there is communication between the inside and the outside of the container 1 through the paper layer 50 of the container main body 10 as well. The bottom part 31 of the container main body 10 may be composed of a paper layer and a PP layer as with the lid body 11.

To manufacture the container 1 having the above configuration, first, a predetermined amount of absorbent A such as an oxygen absorbent is put in the container main body 10 from the upper opening 20. Next, the lid body 11 is fitted into the upper opening 20 with the outer peripheral portion 11a of the lid body 11 being held in contact with the inner peripheral wall of the container main body 10. At this point, the lid body 11 is installed at a desired level on the inner peripheral wall of the container main body 10. For example, to allow for expansion of the absorbent A, the lid body 1 is installed at a predetermined distance above the absorbent A. Then, the upper end portion 10a of the container main body 10 is bent inward to grip the outer peripheral portion 11a of the lid body 11. Thus, the absorbent A is housed inside the container 1.

The container 1 housing the absorbent A is used by being put in a hermetic container or a hermetic bag in which, for example, a food product, pharmaceutical drug, or medical supply is placed.

According to the container 1 of this embodiment, since the upper end portion 10a of the container main body 10 is bent inward to grip the outer peripheral portion 11a of the lid body 11, the clearances Q, R are left between the container main body 10 and the lid body 11. Since the paper layer 50 is used as the inner peripheral layer of the container main body 10 and the paper layer 60 is used as the inner layer of the lid body 11 while these paper layers 50, 60 are exposed to the clearance Q, air permeation between the inside and the outside of the container 1 can be secured through the paper layers 50 and 60, the clearance Q and the clearance R. The outer peripheral portion 11a of the lid body 11 is fitted in the upper opening 20 while being held in contact with the inner peripheral wall of the container main body 10, and the lid body 11 can be installed at an arbitrary level in the container main body 10. Thus, the lid body 11 can be retained at a position above the upper surface of the absorbent A, so that an absorbent A which reacts with a gas to expand can also be suitably housed. Moreover, since the upper end portion 10a of the container main body 10 grips the outer peripheral portion 11a of the lid body 11, it is possible to house an absorbent A which has a small diameter or whose diameter decreases without leakage. Since the paper layers are used for the container main body 10 and the lid body 11, the low-cost container 1 can be realized.

In particular, since the paper layer 50 is used as the inner peripheral layer of the container main body 10 in this embodiment, there is direct communication between the inside and the outside of the container 1 through the paper layer 50, and air permeation can be secured more reliably.

In this embodiment, since the container main body 10 includes the paper layer which has low shape followability, the clearances Q, R are likely to be left between the container main body 10 and the lid body 11 when the upper end portion 10a is bent, so that air permeation between the inside and the outside of the container 1 can be enhanced. It is preferable that the inner peripheral layer of the container main body 10 and the upper layer of the lid body 11 are made of different materials, as it lowers the bondability between these layers and a clearance is likely to be left.

Since the container main body 10 and the lid body 11 are made of a multilayered paper having a non-porous water-impermeable layer, leakage of moisture inside the container 1 to the outside can be suppressed. Thus, the container 1 can be suitably used for an absorbent A which requires moisture during absorption, and in this case, a longer life and higher absorption efficiency of the absorbent A can be achieved.

The container main body 10 includes the cylindrical part 30 which has the opening in the lower surface and the bottom part 31 which covers the opening in the lower surface. The lower end portion 30a of the cylindrical part 30 is bent inward, the bottom part 31 is disposed on the lower end portion 30a of the cylindrical part 30, and the cylindrical part 30 and the bottom part 31 are bonded with each other through the adhesive 40. Thus, the container main body 10 is easy to manufacture, and the cost can be reduced.

In this embodiment, as shown in Figure 4, since the upper end portion 10a of the container main body 10 grips the outer peripheral portion 11a of the lid body 11 and there is the clearance Q which allows upward motion of the lid body 11, even if the absorbent A expands and pushes the lid body 11 upward, the lid body 11 can move upward to accommodate the expansion of the absorbent A.

The dimensions of the container 1 described in the above embodiment may be, for example, 5 mm to 100 mm, preferably 8 mm to 80 mm, in height, and 5 mm to 50 mm, preferably 8 mm to 30 mm, in outer diameter.

While the absorbent A is not particularly limited as long as it absorbs a gas, the absorbent A may be an absorbent which reacts with a gas to expand. For example, the absorbent A may be a desiccant which reacts with water vapor to expand, or an oxygen absorbent which reacts with oxygen to expand. The size of the absorbent A is not particularly limited, and a powder material having a grain size of 0.1 mm or less or a granular material having a grain size of approximately 0.1 to 10 mm can be used, or a molded body of the powder material or the granular material molded into the shape of a tablet etc. can also be used. The grain size of a powder material or a granular material is preferably 0.1 µm to 3000 µm, more preferably 1 µm to 1500 µm, and even more preferably 5 µm to 1000 µm, when being fed into the container 1.

While the type of the desiccant as the absorbent A is not particularly limited, a desiccant which can adsorb moisture and hold the solid state after adsorption of the moisture is preferable. The container of the present invention can also be suitably used for a desiccant which reacts with water vapor to expand or refine. Examples of such a desiccant include alkaline earth metal oxides such as MgO, CaO, and BaO. As these desiccants react with water to expand, even when the desiccant is molded into tablets etc., the shape of the molded body may break and generate fine powders of approximately 1 to 3 µm. Even in this case, leakage of solid matters A can be prevented by using the container 1.

The oxygen absorbent (oxygen scavenger) as the absorbent A is not particularly limited as long as it is a composition having the function of removing oxygen in air through oxidation reaction, adsorption, etc. For example, oxygen absorbent compositions having, as a base compound for oxygen absorption reaction, a metal powder such as an iron powder, a reducing inorganic substance such as an iron compound, a polyhydric phenol, a polyhydric alcohol, an unsaturated fatty acid compound, a reducing organic substance such as ascorbic acid or ascorbate, a resin composition containing a resin and/or oligomer having a carbon-carbon unsaturated bond and a transition metal catalyst, or a metal complex. Of these examples, an oxygen absorbent composition which has an iron powder excellent in oxygen scavenging performance as the base compound is preferable, and in particular, an oxygen absorbent composition composed of an iron powder being the base compound and a metallic halide which promotes oxygen absorption reaction has excellent oxygen scavenging performance. The iron powder used for the oxygen absorbent composition is not particularly limited as long as it can cause an oxygen scavenging reaction, and iron powders normally used as an oxygen absorbent can be used. The metallic halide used for the oxygen absorbent composition is not particularly limited, and examples include alkaline metal or alkaline earth metal chlorides, bromides, and iodides.

Thus, the preferred embodiment of the present invention has been described with reference to the accompanying drawings. However, the present invention is not limited to this example. It is clear that those skilled in the art can conceive ideas for various examples of changes and modifications within the scope of the concept described in the claims, and it is understood that such examples belong duly to the technical scope of the present invention.

For example, while the paper layers 50, 60 are used as the inner peripheral layer of the container main body 10 and the inner layer of the lid body 11 in the above embodiment, the paper layer may be used for only one of these layers. For example, the paper layer 50 may be used for only the inner peripheral layer of the container main body 10, and the inner layer of the lid body 11 may be another type of layer such as a water-impermeable PP layer. In this case, no paper layer needs to be used for the lid body 11. Alternatively, the paper layer 60 may be used for only the inner layer of the lid body 11, and the inner peripheral layer of the container main body 10 may be another type of layer. In this case, a water-impermeable PP layer may be used as the inner peripheral layer of the container main body 10, and a paper layer may be used as the outer layer. In this case, no paper layer needs to be used for the container main body 10. In both cases, air permeation between the inside and the outside of the container 1 can be secured through the paper layer of the container main body 10 or the lid body 11 and the clearance Q and the clearance R. When the inner peripheral layer of the container main body 10 is the paper layer 50, air permeation between the inside and the outside of the container 1 can be secured directly through the paper layer 50.

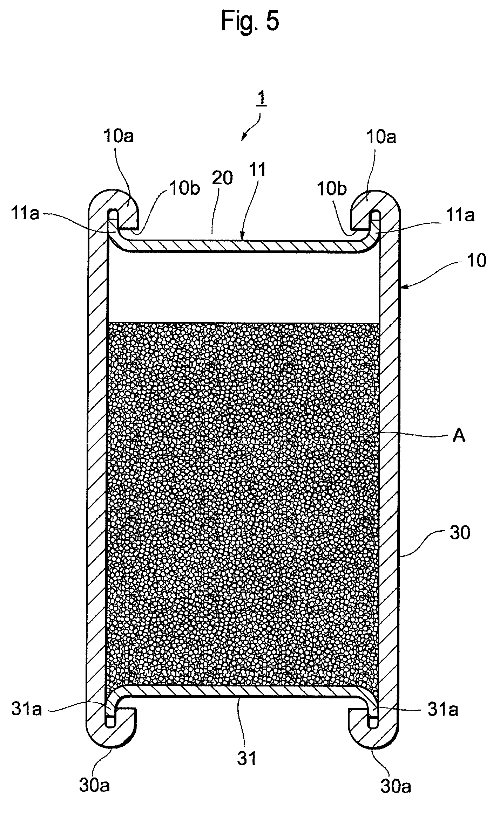

For example, the container main body 10 has the cylindrical part 30 and the bottom part 31 as separate bodies in the above embodiment, but these parts may be integral. While the bottom part 31 is bonded to the container main body 10 with the adhesive 40 in the above embodiment, as shown in Figure 5, the bottom part 31 may have the same configuration as the lid body 11 and the lower end portion 30a of the container main body 10 may be bent inward to grip the outer peripheral portion 31a of the bottom part 31 (the container 1 is vertically symmetric). Moreover, while the container main body 10 has four layers, the number and the material of the layers can be arbitrarily selected as long as a paper layer is included. Similarly, while the lid body 11 has two layers, the number and the material of the layers can be arbitrarily selected. Although it is preferable that a paper layer is included in the lid body 11, it is not absolutely necessary.

While the desiccant and the oxygen absorbent have been mainly shown as examples of the absorbent A, the absorbent A is not limited to these examples, and the present invention is applicable to other absorbents as well. The present invention is also applicable to a case where a plurality of types of absorbents are housed in the container 1 as the absorbent A.

### Examples

### (Example 1)

### (Preparation of an oxygen scavenger composition)

An aqueous solution of 25 g of calcium chloride dissolved in 25 g of water was impregnated into 150 g of powdered zeolite to produce a moisturizer. To this moisturizer, 100 g of an iron powder (containing 50 mass% of grains of 45 µm or smaller) and 1 g of activated carbon were added and the resultant was mixed in a mortar to obtain an oxygen scavenger composition A.

### (Production of an absorbent-containing container)

A sample having the same configuration as the container 1 shown in Figure 2 according to the present invention was filled with 1.2 g of the oxygen scavenger composition A. The dimensions of the sample were φ 10 mm in diameter by 20 mm in height with a clearance d (shown in Figure 4) of 1 mm between the container main body 10 and the lid body 11. For the container main body 10, the following layers were laminated in order from the innermost peripheral layer: paper (woodfree paper, 100 g/m², 130 µm, by Nippon Paper Industries Co., Ltd.), PP (polypropylene, GHC, 30 µm, by Mitsui Chemicals Tohcello, Inc.), paper (woodfree paper, 100 g/m², 130 µm, by Nippon Paper Industries Co., Ltd.), and PET (polyethylene terephthalate, E5100, 12 µm, by Toyobo Co., Ltd.). The configuration of the lid body 11 was the same as that of the container main body 10.

### (Evaluation on oxygen scavenging performance and evaluation on whether leakage of solid matters occurs)

The sample was let stand inside a hermetic gas barrier container having an air volume of 150 ml, at a temperature of 25°C and unregulated humidity, and the time taken for the oxygen concentration to decrease below 0.1 volume% (oxygen scavenging time) was measured. Another sample was let stand inside a hermetic gas barrier container having an air volume of 500 ml, at a temperature of 25°C and unregulated humidity, and the amount of oxygen absorbed in the sample was measured 24 hours later. Moreover, five of the same containers were placed in a plastic bag and manually shaken up and down for 15 seconds to visually evaluate whether leakage of solid matters occurred. Results of these evaluations are shown in Table 1.

### (Example 2)

An evaluation on oxygen scavenging performance and an evaluation on whether leakage of solid matters occurs were performed in the same manner as in Example 1, except that the lid body 11 had a three-layer structure of PP, paper, and PET layers in this order from the innermost layer, with the lamination of the innermost paper layer omitted. Results of these evaluations are shown in Table 1.

### (Example 3)

An evaluation on oxygen scavenging performance and an evaluation on whether leakage of solid matters occurs were performed in the same manner as in Example 1, except that the container main body 10 had a three-layer structure of PP, paper, and PET layers in this order from the innermost peripheral layer, with the lamination of the innermost peripheral paper layer omitted. Results of these evaluations are shown in Table 1.

### (Comparative example 1)

An evaluation on oxygen scavenging performance and an evaluation on whether leakage of solid matters occurs were performed in the same manner as in Example 3, except that the lid body 11 had a three-layer structure of PP, paper, and PET layers in this order from the innermost layer, with the lamination of the innermost paper layer omitted. Results of these evaluations are shown in Table 1.

**[Table 1]**

| | Clearance between main body and lid body (mm) | Innermost peripheral layer of container main body (50) | Innermost layer of lid body (60) | Oxygen scavenging time (hours) | Amount of oxygen absorbed (mL) | Solid matter leakage |
|---|---|---|---|---|---|---|
| Example 1 | 1 | Paper 130 µm | Paper 130 µm | 38 | 35 | None |
| Example 2 | | Paper 130 µm | PP100 µm | 40 | 35 | None |
| Example 3 | | PP30 µm | Paper 130 µm | 40 | 35 | None |
| Comparative example 1 | | PP30 µm | PP100 µm | 60 | 15 | None |

It has been demonstrated that in Examples 1 to 3, where the paper layer was used for at least either the inner peripheral layer of the container main body 10 or the inner layer of the lid body 11, the oxygen scavenging time is significantly shorter, the amount of oxygen absorbed in 24 hours is larger, and the oxygen absorption speed is higher than those of Comparative example 1 where the PP layer was used for both the inner peripheral layer of the container main body 10 and the inner layer of the lid body 11. It has been demonstrated that adequate air permeation can be secured if a paper layer is used for at least either the inner peripheral layer of the container main body 10 or the inner layer of the lid body 11.

### Industrial Applicability

The absorbent-containing container of the present invention is an absorbent-containing container which houses an absorbent for absorbing a gas such as oxygen, and is useful when housing an absorbent which reacts with a gas to expand as well as an absorbent which has a small diameter or whose diameter decreases without leakage, while securing air permeation between the inside and the outside of the container.

### Reference Signs List

- 1: Absorbent-containing container
- 10: Container main body
- 10a: Upper end portion
- 10b: Leading end
- 11: Lid body
- 11a: Outer peripheral portion
- 20: Upper opening
- 30: Cylindrical part
- 31: Bottom part
- 40: Adhesive
- 50: Paper layer
- A: Absorbent
- Q, R: Clearance

## Claims

1. An absorbent-containing container which houses an absorbent for absorbing a gas, the absorbent-containing container comprising:
a lid body; and
a bottomed-cylindrical container main body having an opening in an upper surface which is covered by the lid body, wherein
the lid body is fitted in the opening with an outer peripheral portion of the lid body being bent upward and held in contact with an inner peripheral layer of the container main body,
an upper end portion of the container main body is bent from above the lid body toward the lid body to grip the outer peripheral portion of the lid body, and
a paper layer is used for at least either an inner peripheral layer of the container main body or an inner layer of the lid body.

2. The absorbent-containing container according to claim 1, wherein the container main body has a paper layer.

3. The absorbent-containing container according to claim 1 or 2, wherein the container main body and the lid body are made of a multilayered paper having a non-porous water-impermeable layer.

4. The absorbent-containing container according to any one of claims 1 to 3, wherein
the container main body has a cylindrical part which has an opening in a lower surface, and a bottom part which covers the opening of the lower surface,
a lower end portion of the cylindrical part is bent inward,
the bottom part is disposed on the lower end portion of the cylindrical part, and
the cylindrical part and the bottom part are bonded with each other with an adhesive.

5. The absorbent-containing container according to any one of claims 1 to 4, wherein the absorbent is a desiccant and/or an oxygen absorbent.
